Europäisches Patentamt

European Patent Office

Office européen des brevets

(19)

(11) **EP 0 867 336 B1**

(12) **FASCICULE DE BREVET EUROPEEN**

(45) Date de publication et mention
de la délivrance du brevet:
**28.08.2002 Bulletin 2002/35**

(51) Int Cl.⁷: **B60Q 1/115**

(21) Numéro de dépôt: **98400684.1**

(22) Date de dépôt: **24.03.1998**

(54) **Dispositif de correction d'orientation d'un projecteur de véhicule automobile**

Neigungskorrektur für Fahrzeugscheinwerfer

Inclination correction device for vehicle headlamp

(84) Etats contractants désignés:
**DE ES FR GB IT**

(30) Priorité: **24.03.1997 FR 9703546**

(43) Date de publication de la demande:
**30.09.1998 Bulletin 1998/40**

(73) Titulaire: **VALEO VISION**
**93000 Bobigny (FR)**

(72) Inventeurs:
• **Charret, Jean-Paul**
**92130 Issy-les-Moulineaux (FR)**

• **Lelevé, Joel**
**93800 Epinay sur Seine (FR)**

(74) Mandataire: **Le Forestier, Eric et al**
**Cabinet Régimbeau**
**20, rue de Chazelles**
**75847 Paris cedex 17 (FR)**

(56) Documents cités:
**EP-A- 0 570 291          EP-A- 0 600 798**
**DE-A- 4 122 531          DE-A- 4 341 409**
**DE-A- 19 602 005**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

**Description**

La présente invention est relative à la correction automatique de l'orientation de projecteurs de véhicule automobile lors des variations d'assiettes de celui-ci.

Des dispositifs permettant une telle correction automatique sont déjà connus. Un ensemble selon le préambule de la revendication 1 est connu par DE 4 122 531 A1.

Notamment, il a déjà été proposé par EP-A-186 571 un dispositif de correction automatique de l'orientation des projecteurs d'un véhicule qui comporte trois cellules photo-électriques qui mesurent la luminance au sol de trois zones dans le champ d'éclairement des projecteurs, ainsi que des moyens de traitement pour commander les actuateurs des projecteurs en fonction des rapports des valeurs de luminances mesurées par ces trois cellules.

On connaît également par US 5 193 894 un dispositif qui comporte également des cellules photo-électriques qui permettent d'observer la zone de coupure à l'avant de la tache que fait au sol le faisceau d'éclairage, l'orientation du projecteur étant asservie de façon à maintenir constante la luminance mesurée par ces cellules photo-électriques.

Toutefois, dans l'un et l'autre cas, les mesures réalisées par les cellules photosensibles sont tributaires de l'albédo du sol qui est fortement variable d'un angle à l'autre, notamment pour des angles faibles. Egalement, les orientations de projecteurs obtenues avec ces dispositifs diffèrent fortement selon que la voiture se trouve sur un . revêtement de bitume, sur des pavés ou sur du ciment.

De plus, lorsque l'on circule dans un environnement perturbé par des éclairages externes, tels que des éclairages publics, les éclairages des autres véhicules, les réflexions de panneaux de signalisation, ou encore les réflexions de vitrines ou de murs clairs, on constate que les corrections d'orientation sont altérées par ces éclairages parasites.

Un but de l'invention est de pallier à ces inconvénients.

A cet effet, l'invention propose un ensemble selon la revendication.

D'autres caractéristiques et avantages de l'invention ressortiront encore de la description qui suit. Cette description est purement illustrative et non limitative. Elle doit être lue en regard des dessins annexés sur lesquels :

- la figure 1 est une représentation schématique d'un dispositif de correction automatique d'un ensemble conforme à un mode de réalisation possible de l'invention ;
- la figure 2 est une représentation schématique illustrant l'éclairage que fait au sol le projecteur illustré sur la figure 1 ;
- la figure 3 représente les courbes isocandela d'un exemple d'éclairage obtenu avec un projecteur d'un ensemble conforme à l'invention ;
- la figure 4 est un graphe sur lequel on a porté l'éclairement d'un faisceau de projecteur de véhicule automobile en fonction de la distance à l'avant du véhicule.
- les figures 5a à 5c illustrent la mise en oeuvre de l'invention pour trois types d'assiettes d'un véhicule automobile.

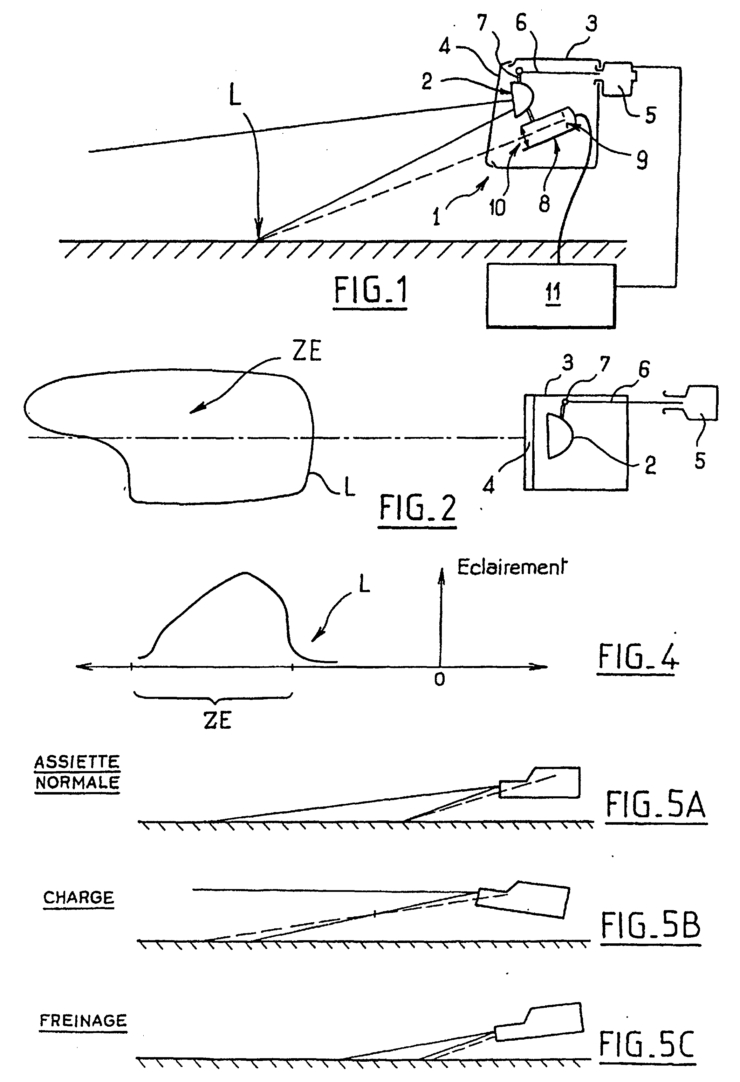

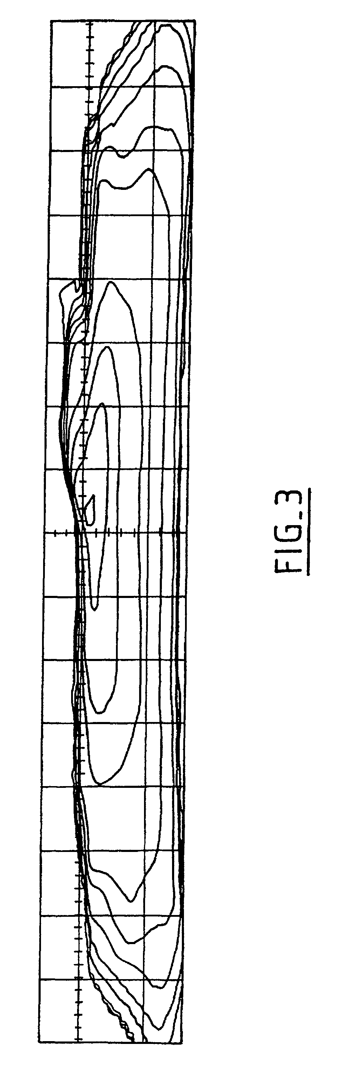

Sur les figures 1 et 2, on a représenté un projecteur 1 comportant un réflecteur 2 disposé à l'intérieur d'un boîtier 3 fermé par une glace 4.

Le réflecteur 2 est orientable en site dans le boîtier 3.

Il présente une forme intérieure qui réfléchit le faisceau émis par la (ou les) source(s) du projecteur de façon à ce que la zone éclairée au sol (zone ZE sur les figures) soit séparée du véhicule par une zone sombre qui s'étend devant celui-ci.

Plus particulièrement, ce réflecteur 2 définit au sol une limite L de coupure basse qui s'étend devant le véhicule et sur sensiblement toute la largeur de celui-ci.

Cette limite L de coupure basse correspond par exemple à un coefficient de netteté de coupure compris entre 0,1 et 0,4 et préférentiellement entre 0,15 et 0,2.

On rappelle que le coefficient de netteté de coupure est un paramètre parfaitement connu de l'Homme du Métier, qui mesure le gradient de la lumière au niveau de la coupure.

Cette limite L de coupure basse est située à quelques mètres du véhicule (de l'ordre de 3 mètres par exemple), dans une zone non perturbante pour le projecteur.

Un exemple d'éclairage obtenu avec un tel réflecteur est illustré sur la figure 3.

Sur les figures 1 et 2, on voit également qu'un actionneur 5, disposé à l'extérieur du boîtier 3, commande les modifications d'orientation de ce réflecteur 2, par l'intermédiaire d'une tige de commande 6 dont l'extrémité est articulée sur un siège 7 que le réflecteur 2 présente en sa partie supérieure.

Le réflecteur 2 est rigidement lié à un capteur optique 8 qui est disposé dans le boîtier 3 et qui adopte les mêmes variations d'inclinaisons que ledit réflecteur 2.

Ce capteur optique 8 comporte une paire de cellules photosensibles 9, ainsi qu'une optique 10 permettant de concentrer sur lesdites cellules 9 les flux lumineux réfléchis par le sol sur le capteur 8.

Le capteur 8 est situé dans le boîtier 3 à proximité du réflecteur 2.

Les cellules photosensibles 9 sont orientées de façon à observer deux zones au sol qui sont situées au niveau de la limite de coupure L entre la zone éclairée par le projecteur 1 (zone ZE) et la zone sombre qui est située entre ladite zone éclairée et le véhicule. Ces deux zones observées par les cellules photosensibles 9 sont réparties l'une derrière l'autre dans une direction parallèle à la direction d'avancement du véhicule.

Ces cellules photosensibles 9 sont reliées à un calculateur 11, qui lui-même commande l'actuateur 5 en fonction des valeurs des éclairements VA et VB mesurés par les cellules 9.

On notera qu'étant donné que les cellules photosensibles 9 mesurent des éclairements à proximité du véhicule, le signal utile est fort (l'effet d'atténuation de l'intensité lumineuse en $1/d^2$ est réduit au minimum).

Par ailleurs, le signal est moins perturbé par les lumières parasites, puisque le rapport signal/parasite est fort.

Enfin, sous l'angle d'incidence par rapport au sol qui correspond à l'observation de la zone limite entre la zone éclairée par le projecteur et la zone sombre qui est située entre ladite zone éclairée et le véhicule (de l'ordre de $10°$ ou supérieur), l'albédo au sol est sensiblement indépendant de l'angle d'incidence du faisceau, et ce quel que soit le type de revêtement.

Par exemple, le calculateur 11 calcule à partir de VA et VB, les valeurs VA-VB, VA+VB ou (VA-VB)/(VA+VB) et discrimine à partir de ces valeurs les différentes situations de réglage du faisceau du projecteur.

Le tableau ci-dessous résume le comportement de ces différentes valeurs, selon que l'orientation du réflecteur du projecteur est correctement réglée (réglage correspondant à une assiette du véhicule telle qu'illustrée sur la figure 5a) ou qu'elle est incorrecte (réglage correspondant à une assiette de surcharge ou de freinage pour le véhicule - figures 5b et 5c).

|  | charge | bon réglage | freinage |
|---|---|---|---|
| VA | fort | fort | faible |
| VB | fort | faible | faible |
| VA+VB | fort | moyen | faible |
| VA-VB | $\simeq 0$ | $\simeq A$ | $\simeq 0$ |
| $\frac{VA-VB}{VA+VB}$ | 0 | valeur caractéristique d'un bon réglage | 0 |

Plus particulièrement, selon une mise en oeuvre avantageuse, le calculateur 11 commande l'actuateur 5 de façon à maintenir sur une valeur de consigne donnée le rapport (VA-VB)/(VA+VB), dont la valeur correspond à la pente de la décroissance de l'éclairement (dont l'évolution en fonction de la distance au véhicule est représentée sur le graphe de la figure 4) au niveau de la zone L de délimitation entre la zone éclairée par le projecteur et la zone sombre à l'avant du véhicule.

La soustraction entre VA et VB permet de faire disparaître le mode d'éclairage commun généré par les éclairages parasites, tandis que la division par la somme de VA et VB permet de s'affranchir au premier ordre de la variabilité de l'albédo des sols.

En maintenant ce rapport sur une valeur de consigne, on maintient constant l'orientation du faisceau d'éclairage du projecteur par rapport au sol.

### Revendications

**1.** Ensemble comportant au moins un projecteur (1) de véhicule automobile qui éclaire une zone du so1, ainsi qu'un dispositif de correction automatique de l'orientation dudit projecteur, ledit dispositif comportant au moins un capteur (8) d'éclairement, un actionneur apte à faire varier l'orientation dudit projecteur (1) par rapport au véhicule, ainsi que des moyens de traitement (11) propres à élaborer un signal de commande de l'actionneur en fonction des signaux engendrés par le capteur (8),

le capteur (8) du dispositif de correction automatique étant orienté de façon à observer au moins une zone au sol située au niveau d'une limite de coupure entre une zone éclairée et une zone sombre, ledit capteur (8) comportant au moins deux cellules photosensibles (9) orientées de façon à observer deux zones au sol réparties l'une derrière l'autre par rapport à la direction d'avancement du véhicule,

**caractérisé en ce que** le projecteur est apte à définir une zone sombre entre le véhicule et l'éclairage au sol, la limite de coupure observée par le capteur étant une limite entre ladite zone sombre et ladite zone éclairée,

et **en ce que** les moyens de traitement (11) commandent l'actuateur de façon à maintenir sur une valeur de consigne donnée le rapport entre la différence et la somme des éclairements mesurés par lesdites cellules (9).

**2.** Ensemble selon l'une des revendications précédentes, **caractérisé en ce que** le projecteur (1) est du type à réflecteur orientable (2). et **en ce que** le capteur (8) d'éclairement est rigidement lié audit réflecteur (2).

**3.** Ensemble selon la revendication 2, **caractérisé en ce que** le capteur (8) du dispositif de correction automatique est disposé avec le réflecteur orientable dans un boîtier (3) fermé par une glace (4).

**4.** Ensemble selon l'une des revendications 2 ou 3, **caractérisé en ce que** le réflecteur (2) présente une forme intérieure apte à réfléchir le faisceau émis par la (ou les) source(s) du projecteur, de façon à définir la limite de coupure entre la zone éclairée par le projecteur (1) et la zone sombre qui est située entre ladite zone éclairée et le véhicule.

**5.** Ensemble selon l'une des revendications 2 à 4, **caractérisé en ce que** le capteur (8) est situé dans le boîtier (3) à proximité du réflecteur (2).

**Patentansprüche**

**1.** Einheit mit wenigstens einem Kraftfahrzeugscheinwerfer (1), der einen Bereich am Boden beleuchtet, sowie mit einer Vorrichtung zur automatischen Regelung der Ausrichtung des Scheinwerfers, wobei diese Vorrichtung wenigstens einen Beleuchtungssensor (8), ein Stellelement, das die Ausrichtung des Scheinwerfers (1) bezüglich des Fahrzeugs zu ändern vermag, sowie Verarbeitungsmittel (11) umfaßt, die ein Signal zur Betätigung des Stellelements in Abhängigkeit von den durch den Sensor (8) erzeugten Signalen zu bilden vermögen, wobei der Sensor (8) der Vorrichtung zur automatischen Regelung so ausgerichtet ist, daß wenigstens ein Bereich am Boden beobachtet wird, der sich in Höhe einer Hell-Dunkel-Grenze zwischen einem beleuchteten Bereich und einem nicht beleuchteten Bereich befindet, wobei der Sensor (8) wenigstens zwei Photozellen (9) umfaßt, die so ausgerichtet sind, daß zwei Bereiche am Boden beobachtet werden, die bezogen auf die Fahrtrichtung des Fahrzeugs hintereinander angeordnet sind,
**dadurch gekennzeichnet, daß** der Scheinwerfer einen nicht beleuchteten Bereich zwischen dem Fahrzeug und dem beleuchteten Boden zu bilden vermag, wobei die von dem Sensor beobachtete Hell-Dunkel-Grenze eine Grenze zwischen diesem nicht beleuchteten Bereich und diesem beleuchteten Bereich ist, und daß die Verarbeitungsmittel (11) das Stellelement so betätigen, daß das Verhältnis zwischen der Differenz und der Summe der von diesen Zellen (9) gemessenen Beleuchtungen auf einem vorgegebenen Einstellwert gehalten wird.

**2.** Einheit nach einem der vorhergehenden Ansprüche,
**dadurch gekennzeichnet, daß** der Scheinwerfer (1) von der Art eines Scheinwerfers mit verstellbarem Reflektor (2) ist und daß der Beleuchtungssensor (8) fest mit dem Reflektor (2) verbunden ist.

**3.** Einheit nach Anspruch 2,
**dadurch gekennzeichnet, daß** der Sensor (8) der automatischen Regelungsvorrichtung zusammen mit dem verstellbaren Reflektor in einem Gehäuse (3) angeordnet ist, das durch eine Scheibe (4) abgeschlossen ist.

**4.** Einheit nach einem der Ansprüche 2 oder 3,
**dadurch gekennzeichnet, daß** der Reflektor (2) eine innere Form aufweist, die das von der Lichtquelle bzw. den Lichtquellen ausgesandte Lichtbündel so zu reflektieren vermag, daß die Hell-Dunkel-Grenze zwischen dem durch den Scheinwerfer (1) beleuchteten Bereich und dem nicht beleuchteten Bereich gebildet wird, der zwischen dem beleuchteten Bereich und dem Fahrzeug liegt.

**5.** Einheit nach einem der Ansprüche 2 bis 4,
**dadurch gekennzeichnet, daß** der Sensor (8) in dem Gehäuse (3) in der Nähe des Reflektors (2) angeordnet ist.

**Claims**

**1.** An assembly comprising at least one motor vehicle headlight (1) for illuminating a zone on the ground, and a device for automatically correcting the inclination of said headlight, said device comprising at least one illumination sensor (8), an actuator suitable for varying the inclination of said headlight (1) relative to the vehicle, and processor means (11) suitable for generating an actuator control signal as a function of the signals generated by the sensor (8), the sensor (8) of the automatic correction device being inclined in such a manner as to observe at least one zone on the ground situated at a cutoff limit between a zone that is illuminated and a zone that is dark, said sensor (8) comprising at least two photosensitive cells (9) pointing in such a manner as to observe two zones on the ground distributed one behind the other relative to the travel direction of the vehicle,

the assembly being **characterized in that** the headlight is suitable for defining a dark zone between the vehicle and the illumination of the ground, the cutoff limit observed by the sensor being a limit between said dark zone and said illuminated zone, and **in that** the processor means (11) control the actuator so as to maintain a given reference value for the ratio between the difference and the sum of the illuminations measured by said cells (9).

2. An assembly according to any preceding claim, **characterized in that** the headlight (1) is of the type having a tiltable reflector (2) and **in that** the illumination sensor (8) is rigidly associated with said reflector (2).

3. An assembly according to claim 2, **characterized in that** the sensor (8) of the automatic correction device is disposed with the tiltable reflector in a housing (3) closed by a glass (4).

4. An assembly according to claim 2 or claim 3, **characterized in that** the reflector (2) presents an inside shape suitable for reflecting the beam emitted by the source(s) of the headlights, so as to define the cutoff limit between the zone illuminated by the headlight (1) and the dark zone which is situated between said illuminated zone and the vehicle.

5. An assembly according to any one of claims 2 to 4, **characterized in that** the sensor (8) is situated in the housing (3) close to the reflector (2).

FIG.1

ZE

FIG.2

Eclairement

FIG.4

ZE

ASSIETTE
NORMALE

FIG.5A

CHARGE

FIG.5B

FREINAGE

FIG.5C

EP 0 867 336 B1

FIG_3

7